# EUROPEAN PATENT APPLICATION

(11) **EP 4 810 284 A1**
(43) Date of publication of application: **23.09.2026**
(21) Application number: 26166431.2
(22) Date of filing: 20.03.2026
(51) Int. Cl.: B60J 5/04, B62D 25/02, E05B 83/38

(54) **B-PILLARLESS BODY AND DOOR ASSEMBLY FOR A VEHICLE**

(30) Priority: 21.03.2025 US 202563775724 P; 19.03.2026 US 202619572067
(71) Applicant: Magna International Inc., Aurora, ON L4G 7K1 (CA)
(72) Inventor: Womack, Darren A., LaSalle, Ontario, N9J 2J1 (CA); Merino, Miguel, Rochester Hills, MI, 48307 (US); Kharbanda, Sunny, Rochester Hills, MI, 48309 (US)
(74) Representative: Grünecker Patent- und Rechtsanwälte PartG mbB

(57) **Abstract**

A vehicle door assembly includes a vehicle body having an A pillar, a C pillar, an upper rail, and a rocker rail that together define an access opening. A front door is movably connected to the body near the A pillar, and a rear door is movably connected to the body near the C pillar. The rocker rail defines a front compartment adjacent the A pillar and a rear compartment adjacent the C pillar. A front actuator is positioned in the front compartment and a rear actuator is positioned in the rear compartment. A front linkage connects the front door, the front actuator, and the body near the A pillar, and a rear linkage connects the rear door, the rear actuator, and the body near the C pillar. Actuation of the actuators causes the linkages to move the front and rear doors between open and closed positions.

## Description

### CROSS REFERENCE TO RELATED APPLICATIONS

This U.S. Utility Patent Application claims priority to U.S. Provisional Patent Application Serial Number 63/775,724, filed on March 21, 2025, the entire disclosure of which is hereby incorporated by reference in its entirety.

### FIELD OF THE DISCLOSURE

The present disclosure relates to vehicle body and door assemblies, such as for automobiles. More particularly, the present disclosure relates to a vehicle body and door assembly that omits a B-pillar to provide a larger access opening into the vehicle.

### BACKGROUND

This section provides background information related to the present disclosure which is not necessarily prior art.

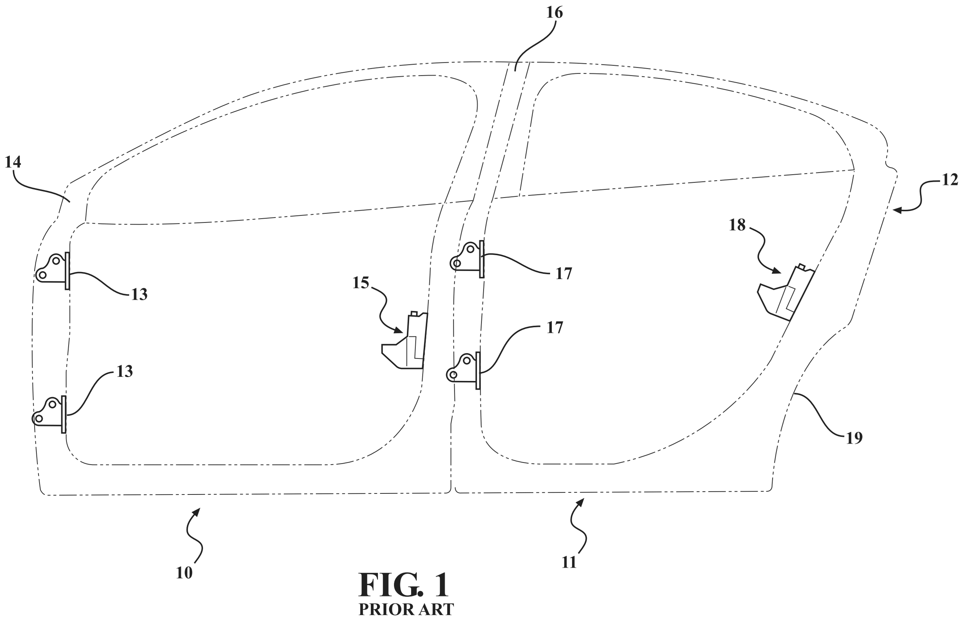

As shown in FIG. 1, sedan and sport utility vehicles typically have a front door 10 and a rear door 11 to permit access to an interior of the vehicle. The front door 10 is attached to the vehicle body 12 with front hinges 13 along an A pillar 14 of the body 12, enabling the front door 10 to pivot between open and closed positions. A front latch assembly 15 on a B pillar 16 selectively secures the opposite end of the front door 10 to the B pillar 16. Similarly, the rear door 11 pivots on rear hinges 17 along the B pillar 16. A rear latch assembly 18 on a C pillar 19 of the vehicle selectively secures an opposite end of the rear door 11 to the C pillar 19. This configuration results in separate entry points for the front and rear sections of the interior of the vehicle.

Vehicles without a B pillar have also been developed to provide a larger access opening to the interior of the vehicle. According to such an arrangement, the front door is coupled to the A pillar via a linkage, and the rear door is coupled to the C pillar via a linkage. The front door is configured to translate away from the side of the vehicle and toward a front of the vehicle to open an access opening to the interior. Similarly, the rear door is configured to translate away from the side of the vehicle and toward a rear of the vehicle to open the access opening to the interior. Edges of the front and rear doors meet when the doors are closed. However, the hinge and latch assemblies required for this type of movement often demand more space than traditional door designs, impacting aspects like wheelbase, battery space, styling, and aerodynamics. There remains a need for improved body and door assembly designs.

### SUMMARY OF THE DISCLOSURE

According to an aspect of the disclosure, a door assembly for a vehicle includes a body of the vehicle that includes a pair of sides. Each of the sides has an A pillar adjacent to a front of the body, a C pillar adjacent to a rear of the body, an upper rail that extends between tops of the A and C pillars, and a rocker rail that extends between bottoms of the A and C pillars. The A pillar, C pillar, upper rail and rocker rail together define an access opening therebetween. A front door is connected to the body near the A pillar in a manner allowing movement. A rear door is connected to the body near the C pillar in a manner allowing movement. Each of the front door and the rear door is moveable between an open position that provides access to the opening and a closed position that restricts access to the opening. The rocker rail defines a front compartment adjacent to the A pillar. The rocker rail defines a rear compartment adjacent to the C pillar. A front actuator is coupled to the body in the front compartment. A rear actuator is coupled to the body in the rear compartment. A front linkage connects the front door, the front actuator and the A pillar. A rear linkage connects the rear door, the rear actuator and the C pillar. The front and rear linkages facilitate opening and closing of the front and rear doors in response to actuation of the front and rear actuators.

According to another aspect of the disclosure, a method of assembling a door assembly for a vehicle includes providing a body of the vehicle that has a pair of sides. Each of the sides includes an A pillar, a C pillar, an upper rail extending between tops of the A pillar and the C pillar, and a rocker rail extending between bottoms of the A pillar and the C pillar. The A pillar, the C pillar, the upper rail and the rocker rail together define an access opening. The method includes defining a front compartment in the rocker rail adjacent to the A pillar. The method also includes defining a rear compartment in the rocker rail adjacent to the C pillar. The method also includes coupling a front actuator to the body in the front compartment. The method also includes coupling a rear actuator to the body in the rear compartment. The method also includes connecting a front linkage between a front door, the front actuator and the body near the A pillar. Finally, the method includes connecting a rear linkage between a rear door, the rear actuator and the body near the C pillar, such that actuation of the actuators facilitates opening and closing of the front and rear doors.

According to another aspect of the disclosure, a door assembly for a vehicle includes a body of the vehicle that includes a pair of sides. Each of the sides has an A pillar adjacent to a front of the body, a C pillar adjacent to a rear of the body, an upper rail extending between tops of the A and C pillars, and a rocker rail extending between bottoms of the A and C pillars. The A pillar, C pillar, upper rail and rocker rail define an access opening therebetween. A front door is moveably connected to the body near the A pillar, and a rear door is moveably connected to the body near the C pillar. Each of the front and rear doors are moveable between an open position opening the access opening and a closed position closing the access opening. A front linkage connects the front door and the body on or along the A pillar, and a rear linkage connects the rear door and the body on or along the C pillar. The front and rear linkages facilitate opening and closing of the front and rear doors in response to actuation of the front and rear actuators. The rocker rail defines a front compartment adjacent the A pillar, and a rear compartment adjacent to the C pillar, and the front linkage is coupled to the body in the front compartment and the rear linkage is coupled to the body in the rear compartment.

Accordingly, the body and door assembly provides a body arrangement which omits a B-pillar in which the linkages, actuators, and associated components are packaged without adversely affecting wheel space, battery space, exterior styling, fenders, or aerodynamics, while also improving ingress to and egress from the vehicle. Furthermore, the portions of the rocker panel which contain these components may be painted with the rest of the body in white to provide color harmony along the body in white. The body and door assembly may also be assembled to the vehicle without significant departure from typical assembly processes. In addition, the components of the door assembly may be readily serviced.

### BRIEF DESCRIPTION OF THE DRAWINGS

Other advantages of the present disclosure will be readily appreciated, as the same becomes better understood by reference to the following detailed description when considered in connection with the accompanying drawings wherein:
FIG. 1 is a side view of a conventional body and door assembly for a vehicle;
FIG. 2 is a side view of an embodiment of a body and door assembly for a vehicle, according to an aspect of the disclosure, illustrating doors of the door assembly in a closed position;
FIG. 3 is a side view of the of the body and door assembly for a vehicle, illustrating doors of the door assembly in an open position;
FIG. 4 is a top view of the body and door assembly for a vehicle, illustrating doors of the door assembly in an open position;
FIG. 5 is a diagram illustrating forming first and second castings and an extrusion to define a rocker rail and the integration of the rocker rail into the rest of the body in white.
FIG. 6 is a perspective view of the body, including front and rear linkages coupled to the body, and illustrating the placement of covers over the front and rear linkages;
FIG. 7 is a magnified view of a front actuator and a front linkage coupled to the body of FIG. 6;
FIG. 8 is a magnified view of a rear actuator and a rear linkage coupled to the body of FIG. 6;
FIG. 9A-9B are diagrams illustrating installation of front and rear actuators to the body;
FIG. 10 is a perspective view illustrating a connection of the front actuator to a front linkage;
FIG. 11 is a top view illustrating the connection of the front actuator to the front linkage;
FIGS. 12A-12B are diagrams illustrating installation of front and rear linkages to front and rear doors of the door assembly; and
FIG. 13 is a diagram illustrating connection of the front and rear doors to the body.

### DESCRIPTION OF THE ENABLING EMBODIMENT

Example embodiments will now be described more fully with reference to the accompanying drawings. In general, the subject embodiments are directed to embodiments of a door assembly for a vehicle, however the example embodiments are only provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms, and that neither should be construed to limit the scope of the disclosure. In some example embodiments, well-known processes, well-known device structures, and well-known technologies are not described in detail. It should be appreciated that the teachings of the present disclosure could be applied to various types of vehicles such as recreation vehicles.

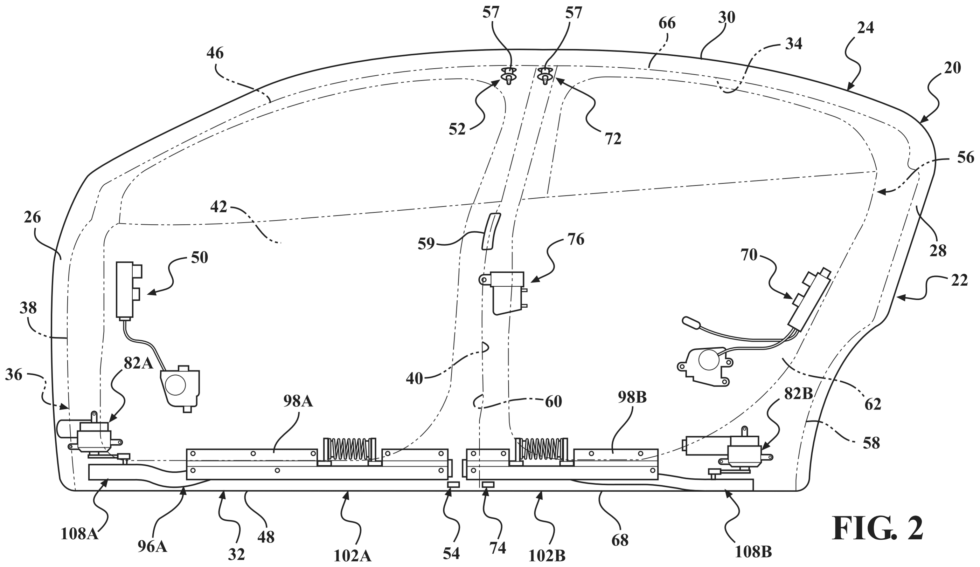

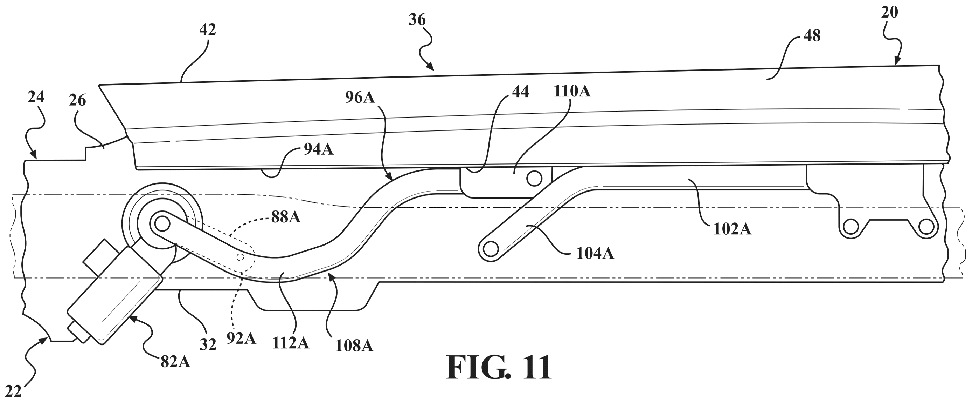

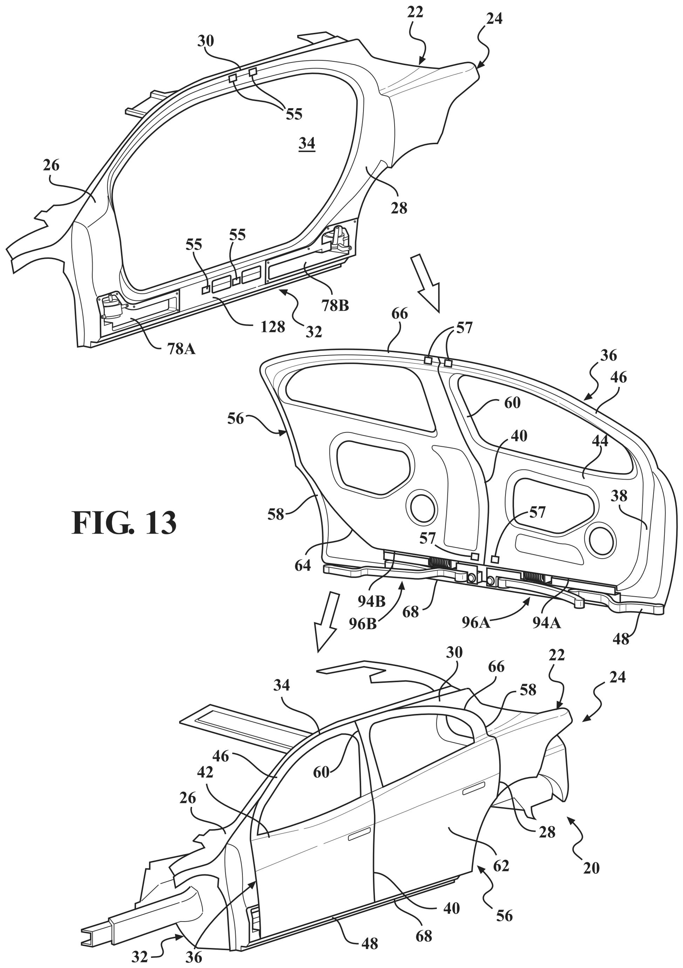

More particularly, referring to FIGS. 2-13, wherein like numerals indicate corresponding parts throughout the several views, embodiments of a body and door assembly 20 for a vehicle are shown.

With reference to FIG. 2-4, the vehicle has a body 22 with a passenger side 24 and a driver side (not shown) opposite the passenger side. The disclosure presents a driver side of the vehicle, but the teachings of the present disclosure may be applied to both sides of the vehicle. Furthermore, the teachings of the present disclosure may be applied to a body at the "body-in-white" stage of production of the vehicle. The body-in-white stage is when the basic structure of the body, including the body shell and frame, is built. At this stage, the vehicle's metal parts (like the frame, doors, roof, and other panels) are welded or joined together, but there are no paint, interior, or mechanical parts like the engine, wheels, or seats yet. The vehicle body is typically painted at this stage. The teachings of the present disclosure may also be applied at other stages of production of the body 22.

The body 22 includes an A pillar 26 adjacent to a front of the body 22, and a C pillar 28 adjacent to a rear of the body 22. An upper rail 30 (i.e., a cant rail) extends between a top of the A pillar 26 and a top of the C pillar 28. A rocker rail 32 (lower side rail) extends between a bottom of the A pillar 26 and a bottom of the C pillar 28, generally parallel to the upper rail 30. An access opening 34 is defined between the A pillar 26, C pillar 28, upper rail 30 and rocker rail 32.

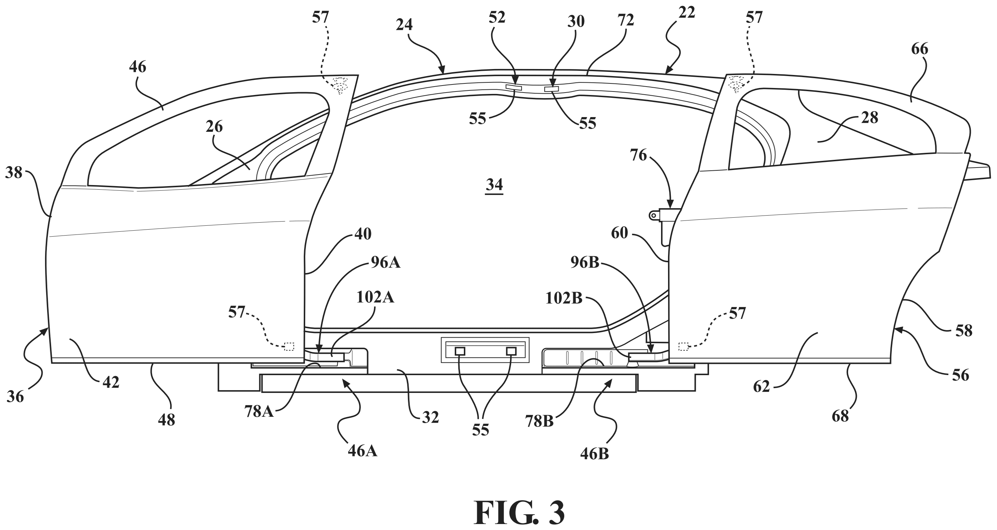

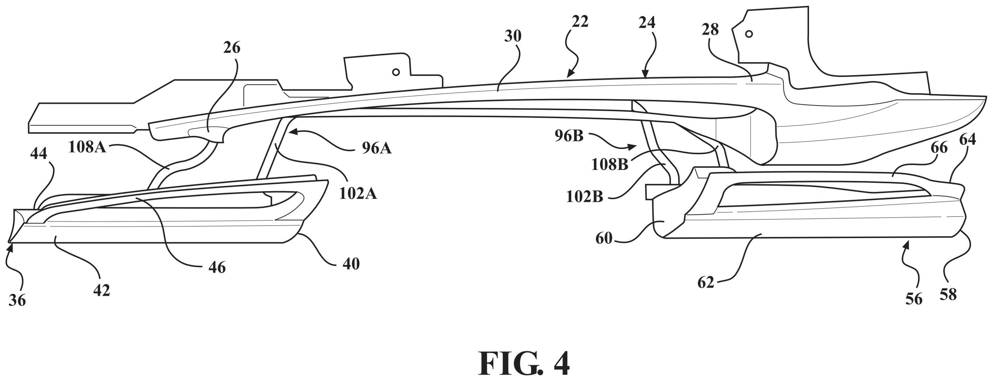

A front door 36 has a front edge 38 and a rear edge 40 opposite the front edge 38. The front door 36 also has an outer surface 42, an inner surface 44 opposite the outer surface 44, a top portion 46 and a bottom portion 48. The front door 36 is coupled to the rocker rail 32 and A pillar 26 by way of a front linkage 96A and is moveable between a closed position closing a front region of the access opening 34 (FIG. 2), and an open position (FIGS. 3 and 4) in which the front region of the access opening 34 is open to permit access to a front of the vehicle. More particularly, as illustrated in FIGS. 2-4, the front door 36 is configured to translate in both an outward direction away from the side 24 of the vehicle and in forward and rearward directions.

As illustrated in FIG. 2, an A pillar latch assembly 50 selectively couples the front door 36 to the A pillar 26. Furthermore, a front top catch pin assembly 52 is configured to selectively couple the top portion 46 of the front door 36 near the rear edge 40 to the upper rail 30 when the front door 36 is in the closed position. Similarly, a front bottom catch pin assembly 54 is configured to selectively couple the bottom portion 48 of the front door 36 near the rear edge 40 to the rocker rail 32 when the front door 36 is in the closed position. The front top catch pin assembly 52 and the front bottom catch pin assembly 54 may each include a slot 55 defined by the body 22 and a pin 57 on the front door 36 which is configured to be received in the slot 55 to align and secure the front door 36 to the body 22.

Likewise, a rear door 56 has a rearward edge 58 and a frontward edge 60 opposite the rearward edge 58. The rear door 56 also has an outer surface 62, an inner surface 64 opposite the outer surface 62, a top portion 66 and a bottom portion 68. The rear door 56 is coupled to the rocker rail 32 and the C pillar by way of a rear linkage 96B and is moveable between a closed position closing a rear region of the access opening 34 (FIG. 2), and an open position in which the rear region of the access opening 34 is open (FIGS. 3 and 4). More particularly, as illustrated in FIGS. 2-4, the rear door 56 is configured to translate in both an outward direction away from the side 24 of the vehicle and in forward and rearward directions. As shown in FIG. 2, the rear edge 40 of the front door 36 and the frontward edge 60 of the rear door 56 meet when the front and rear doors 36, 56 are in the closed position to close the access opening 34.

As shown in FIG. 2, a C pillar latch assembly 70 selectively couples the rear door 56 to the C pillar 28. Furthermore, a rear top catch pin assembly 72 is configured to selectively couple the top portion 66 of the rear door 56 near the frontward edge 60 to the upper rail 30 when the front door 36 is in the closed position. Similarly, a rear bottom catch pin assembly 74 is configured to selectively couple the bottom portion 48 of the rear door 56 near the frontward edge 60 to the rocker rail 32 when the rear door 56 is in the closed position. The rear top catch pin assembly 72 and the rear bottom catch pin assembly 74 may each include a slot 55 defined by the body 22 and a pin 57 on the rear door 56 which is configured to be received in the slot 55 to align and secure the rear door 56 to the body 22.

In addition to coupling the doors 36, 56 to the body 22 when in the closed position, the catch pin assemblies 52, 54, 72, 74 ensure that door seals are compressed while in the closed position to ensure that the interior of the vehicle is sealed from the ambient environment. The catch pin assembly 52, 54, 72, 74 also retain the doors 36, 56 to the body 22 in the event of a collision event.

A door to door latch assembly 76 is located at the rear edge 40 of the front door 36 and the frontward edge 60 of the rear door 56, and is configured to couple the front and rear doors 36, 56 to one another when the front and rear doors 36, 56 are in the closed position. The door to door latch assembly 76 is selectively actuable by an operator to lock and unlock the front and rear doors 36, 56 relative to one another. The vehicle may include a controller and associated input devices, e.g., buttons and key fobs, to control the door to door latch assembly 76 and other actuable components discussed herein. As shown, the arrangement of the rear edge 40 of the front door 36 and the frontward edge 60 of the rear door 56 effectively provide an integrated B pillar when the doors 36, 56 are in the closed position. A sealing assembly 59 (schematically shown) is located at this meeting to seal the union of the front and rear doors 36, 56.

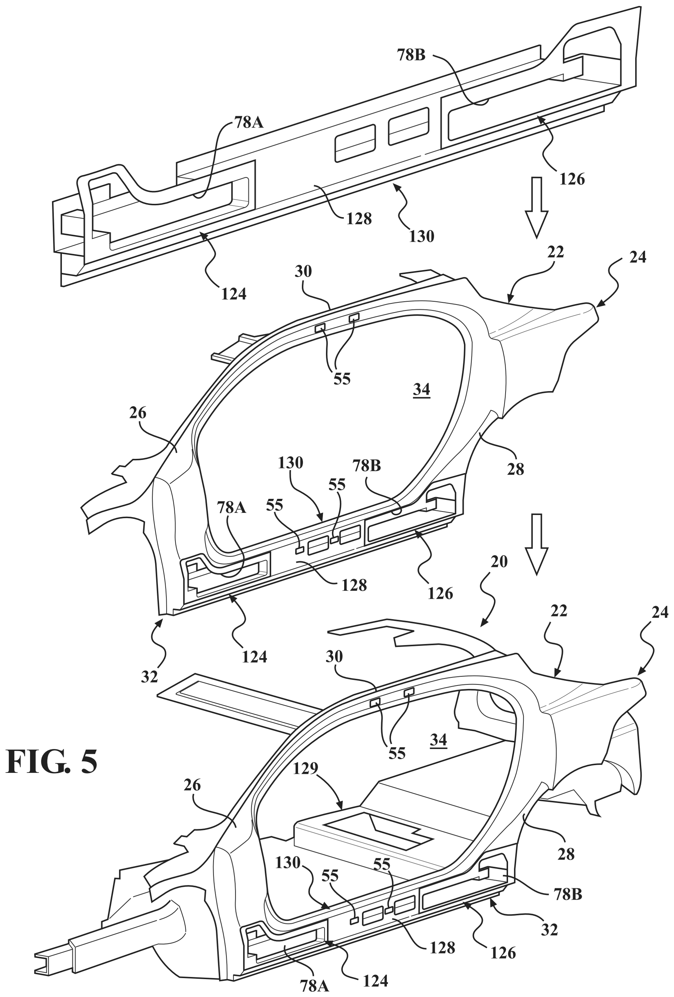

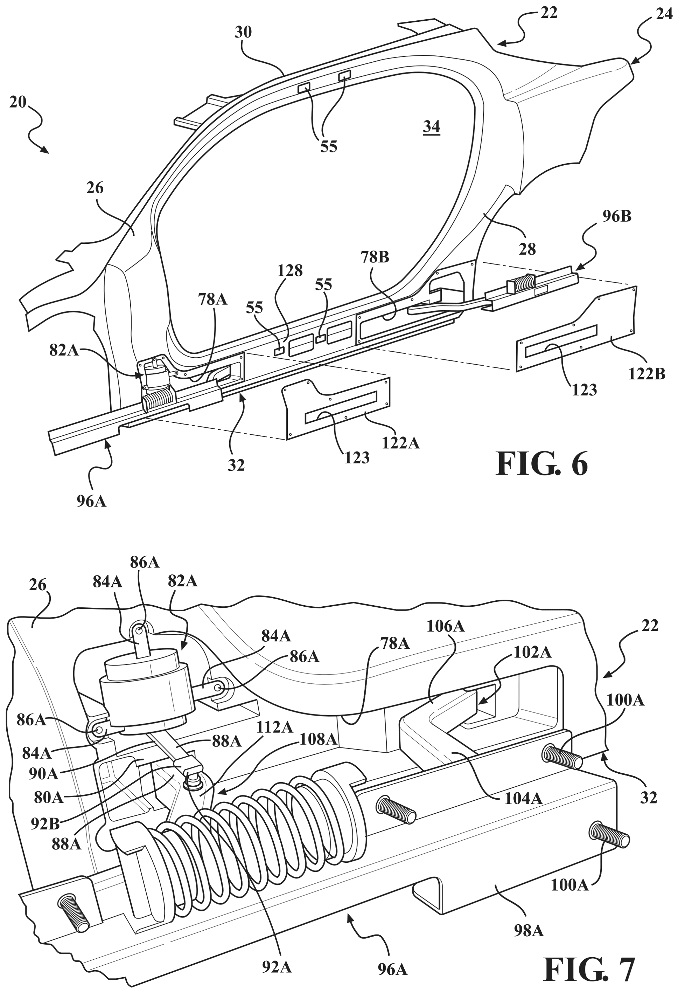

As best shown in FIG. 5, the rocker rail 32 is comprised of a first (front) casting 124, a second (rear) casting 126 and an extrusion 128 located between the first and second castings 124, 126. As shown, after this rocker rail 32 assembly is formed, other body in white components, like a bodyside inner, bodyside outer, hinge pillar and C pillar are attached to the rocker rail 32. Then a floor assembly 192, roof rail assembly and front assembly are connected to the bodyside assembly. The first casting 124 defines a front compartment 78A aligned with the A pillar 26 and toward the front of the body 22. As best shown in FIGS. 7-11, a front motor platform 80A is located in the front compartment 78A. A front actuator 82A is coupled to the front motor platform 80A in the front compartment 78A. Three connection flanges 84A extend from the front actuator 82A, and each receive a fastener 86A, e.g., bolts, to secure the front actuator 82A to the front motor platform 80A. A front motor linkage 88A has a first end 90A that is coupled to a rotary output of the front actuator 82A for rotating with the rotary output, and a second end 92A opposite the first end 90A.

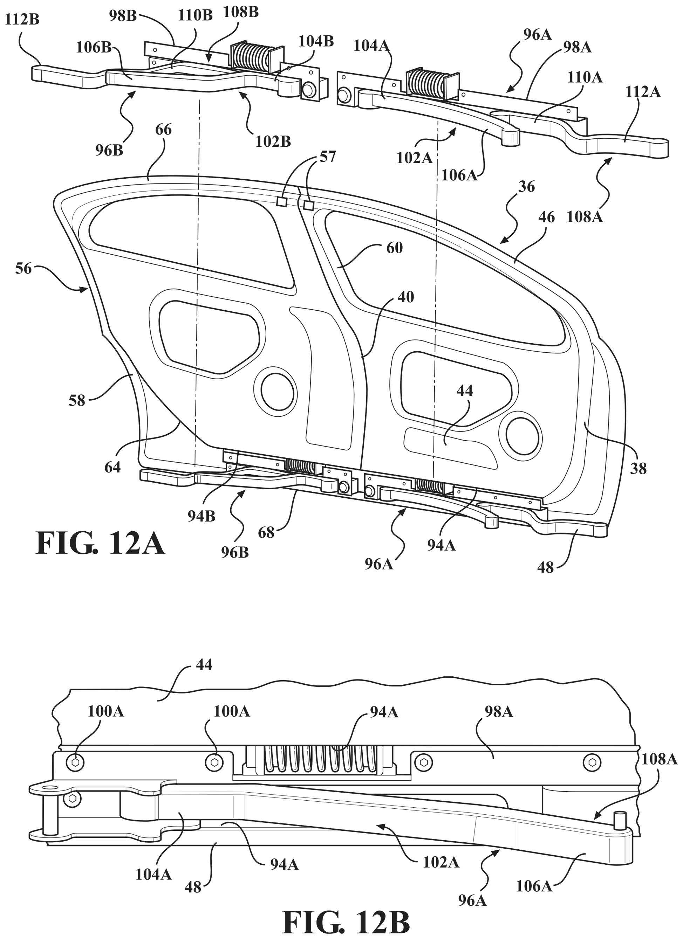

As best shown in FIG. 12A-13, the bottom portion 48 of the inner surface 44 of the front door 36 defines a front recess 94A. A front linkage 96A is coupled to the inner surface 44 of the front door 36 in the front recess 94A, and is coupled to the front actuator 82A and rocker panel 32 of the body 22 to effectuate the pivoting of the front door 36. The front linkage 96A has front base 98A that is coupled to the inner surface 44 of the front door 36 in the front recess 94A via an arrangement of fasteners 100A such as bolts 100A. The front linkage 96A also has a first front link 102A that is pivotally coupled to the front base 98A at a first end 104A and pivotally coupled to the rocker rail 32 in the front recess 94A at a second end 106A. The front linkage 96A also has a second front link 108A in spaced relationship with the first front link 102A. The second front link 108A is pivotally connected to the front base 98A at a first end 110A, and pivotally coupled to the second end 92A of the front motor linkage 88A near a second end 112A to effectuate pivoting of the second front link 108A and movement of the front door 36. As best demonstrated by FIGS. 2-4, the arrangement and shapes of the first and second front links 102A, 108A constitutes a four bar linkage which effectuates the outward/inward and frontward/backward movements of the front door 36.

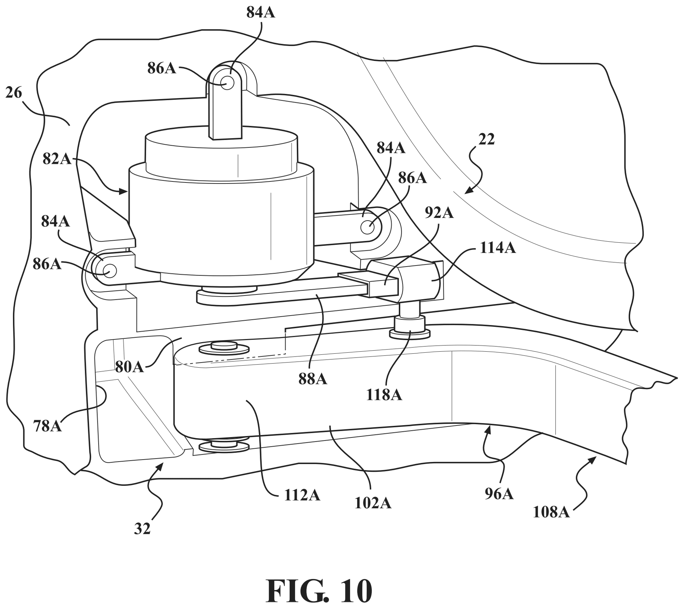

As best shown in FIGS. 10, the connection of the second front leg 108A to the second end 92A of the front motor linkage 88A includes a front ball joint (inside 114A) that is coupled to the second end 92A of the front motor linkage 88A to accommodate pivoting in all directions. A shaft 116A extends from the front ball joint 114A which terminates at a nut 118A. A bolt 120A extends through the second front link 108A and the front motor platform 80A and is threadedly secured to the nut 118A. This arrangement 12 permits rotation of the rotary output of the front actuator 82A to effectuate rotation of the front motor linkage 88A, which thereby also causes rotation of the first and second front links 102A, 108A to pivot the front door 36 between the open and closed positions.

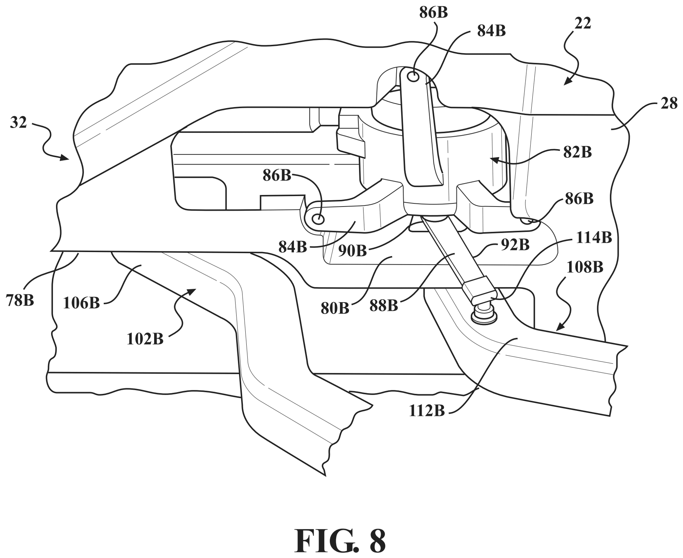

With reference to FIGS. 5 and 8, the second casting 126 of the rocker rail 32 defines a rear compartment 78B aligned with the C pillar 28 and toward the rear of the body 22. A rear motor platform 80B is located in the rear compartment 78B. A rear actuator 82B is coupled to the rear motor platform 80B in the rear compartment 78B. The rear actuator 82B also has three connection flanges 84B that each receive a fastener 86B, e.g., bolts 86B, to secure the rear actuator 82B to the rear motor platform 80B. A rear motor linkage 88B has a first end 90B that is coupled to a rotary output of the actuator 82B for rotating with the actuator 82B. The rear motor linkage 88B also has a second end 92B opposite the first end 90B in the same manner as the front motor linkage 88A.

As best shown in FIGS. 12A-13, a bottom of the inner surface 64 of the rear door 56 defines a rear recess 94B. A rear linkage 96B is coupled to the inner surface 64 of the rear door 56 in the rear recess 94B and is coupled to the rear actuator 82B and rocker rail 32 of the body 22 to effectuate the pivoting movement of the rear door 56. More particularly, the rear linkage 96B has a rear base 98B that is coupled to the inner surface 64 of the rear door 56 in the rear compartment 78B via an arrangement of fasteners 100B such as rivets 100B. The rear linkage 96B also has a first rear link 102B that is pivotally coupled to the rear base 98B at a first end 104B and pivotally coupled to the rocker rail 32 in the rear recess 94B at a second end 106B. The rear linkage 96B also has a second rear link 108B in spaced relationship with the rear front link 102B. The second rear link 108B is pivotally connected to the rear base 98B at a first end 104B, and pivotally coupled to both the motor platform 80B and the second end 92B of the rear motor linkage 88B near a second end 106B. This arrangement permits rotation of the rotary output of the rear actuator 82B to effectuate rotation of the rear motor linkage 88B, which thereby also causes rotation of the first and second rear links 102B, 108B to pivot the rear door 56 between the open and closed positions in the same manner as the front door 36.

The connection of the second rear link 108B to the second end 92B of the rear motor linkage 88B includes the same structural arrangement as that of the connection of the first rear link 18A to the second end of the front motor linkage 88A.

As shown in FIG. 6, a front cover 122A may be positioned over the front compartment 78A and a rear cover 122B may be positioned over the rear compartment 78B to inhibit the entrance of dust and debris into the front and rear compartments 78A, 78B, and to provide an aesthetically pleasing appearance. The front and rear covers 122A, 122B may have various shapes and sizes. The links 102A, 102B may pass through openings 123 in the covers 122A, 122B.

With reference back to FIG. 5, the front compartment 78A and front motor platform 80A of the rocker rail 32 are part of the first casting 124, the rear compartment 78B and rear motor platform 80B of the rocker rail 32 are part of the second casting 126. Furthermore, the extrusion 128 is positioned between the first and second castings 124, 126. The extrusion 128 is used for side impact absorption purposes and may define slots 55 for holding the front and rear bottom catch pin assemblies 54, 74. Alternatively, catch pins may be formed on the extrusion 128, which may be received in slots on the front and rear doors 36, 56. The first and second castings 124, 126 may also define slots 55 for receiving the catch pins. Both castings 124, 126 and the extrusion 128 may be made of metal materials, such as aluminum. The arrangement of the first and second castings 124, 126 and extrusion 130 permits the castings 124, 126 and extrusion 128 to be part of the body in white of the vehicle prior to connection of the front and rear linkages 96A, 96B, which ensures that the castings and extrusion 124, 126, 128 get painted the same color as the rest of the body in white, which eliminates color mismatching. According to this arrangement, the castings 124, 126 and extrusion are only needed in the complex front and rear areas, which is less costly than utilizing a single large casting. The extrusion 128 also results in improved weight management. Furthermore, the arrangement of the first and second actuators 82A, 82B in the first and second castings 124, 126 permits the first and second actuators 82A, 82B to easily be removed and serviced without removing many components.

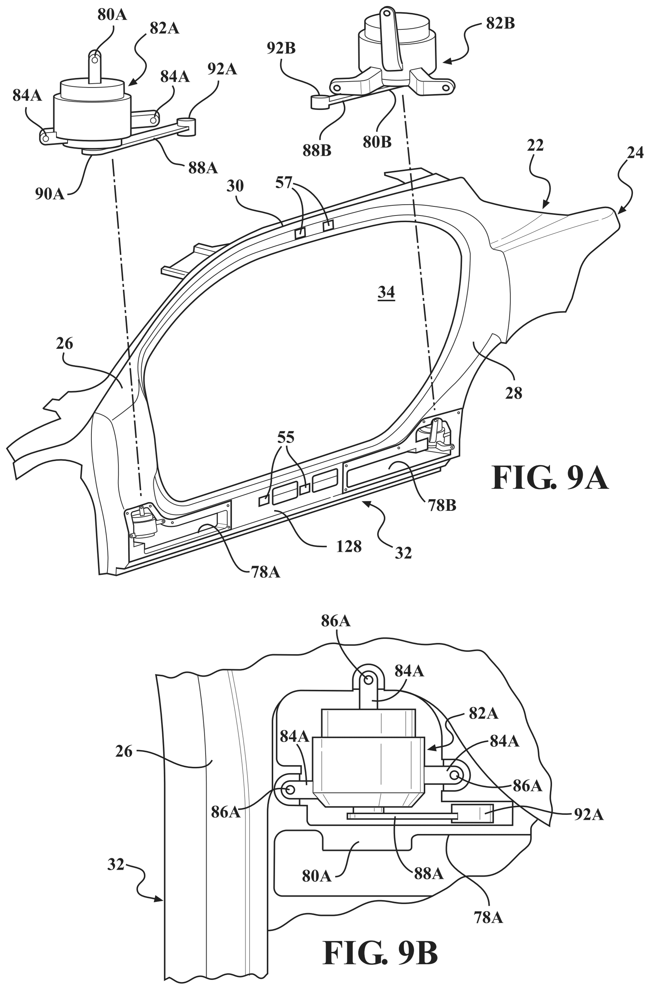

As shown in FIGS. 9A-9B, during assembly of the body and door assembly 20, the front and rear actuators 82A, 882B may initially be attached to the front and rear motor platforms 80A, 80B in the front and rear compartments 78A, 78B. Simultaneously, or after connecting of the front and rear actuators 82A, 82B, the front and rear linkages 86A, 96B may be connected to the front and rear doors 36, 56. As shown in FIGS. 10, at this time, the front and rear linkages 86A, 96B may be coupled to the front and rear actuators 82A, 82B.

Embodiments of the body and door assembly 20 can provide a vehicle body 22 having an A pillar 26, a C pillar 28, an upper rail 30, and a rocker rail 32 that define an access opening 34 in the absence of a fixed B-pillar, thereby improving ingress to and egress from the vehicle. In some embodiments, the rocker rail 32 includes a first casting 124, a second casting 126, and an extrusion 128, with a front compartment 78A and a rear compartment 78B housing a front actuator 82A and a rear actuator 82B that actuate a front linkage 96A and a rear linkage 96B to move the front door 36 and the rear door 56. This arrangement can package the door-motion components within the lower body structure without adversely affecting wheel space, battery space, exterior styling, fenders, or aerodynamics. The castings 124, 126 and extrusion 128 can be incorporated into the body-in-white so that they are painted with the body 22, which can reduce color mismatch, while the use of the extrusion 128 between the castings 124, 126 can reduce cost, improve weight management, and provide side impact absorption. In some embodiments, the actuators 82A, 82B are also readily removable for service, and the assembly process can be carried out without substantial departure from typical vehicle assembly processes.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in that particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or later, or intervening element or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to described various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in any embodiment, even if not specifically shown or described. The same may also be varied in many ways. Such variations are not to be regarded as a departure from the disclosure, and all such modifications are intended to be included within the scope of the disclosure.

## Claims

1. A door assembly for a vehicle, comprising:
a body (12, 20, 22) of the vehicle including a pair of sides (24), each of the sides (24) including:
an A pillar (14, 26) adjacent to a front of the body (12, 20, 22);
a C pillar (19, 28) adjacent to a rear of the body (12, 20, 22);
an upper rail (30) extending between tops of the A and C pillars (14, 19, 26, 28);
and a rocker rail (32) extending between bottoms of the A and C pillars (14, 19, 26, 28);
wherein the A pillar (14, 26), C pillar (19, 28), upper rail (30) and rocker rail (32) define an access opening (34) therebetween;
a front door (10, 36) connected to the body (12, 20, 22) near the A pillar (14, 26) in a manner allowing movement;
a rear door (11, 56) connected to the body (12, 20, 22) near the C pillar (19, 28) in a manner allowing movement;
wherein each of the front door (10, 36) and rear door (11, 56) is moveable between an open position that provides access to the opening (34) and a closed position that restricts access to the opening (34);
the rocker rail (32) defining a front compartment (78A) adjacent to the A pillar (14, 26);
the rocker rail (32) defining a rear compartment (78B) adjacent to the C pillar (19, 28);
a front actuator (82A) coupled to the body (12, 20, 22) in the front compartment (78A);
a rear actuator (82B) coupled to the body (12, 20, 22) in the rear compartment (78B);
a front linkage (96A) connecting the front door (10, 36), the front actuator (82A) and the A pillar (14, 26);
a rear linkage (96B) connecting the rear door (11, 56), the rear actuator (82B) and the C pillar (19, 28); and
and wherein the front and rear linkages (96A, 96B) facilitate opening and closing of the front and rear doors (10, 11, 36, 56) in response to actuation of the front and rear actuators (82A, 82B).

2. The door assembly of claim 1, wherein the rocker rail (32) comprises a first casting (124) defining the front compartment (78A) and a second casting (126) defining the rear compartment (78B), wherein optionally the rocker rail (32) further includes an extrusion (128, 130) located between the first casting (124) and the second casting (126).

3. The door assembly of claim 1, wherein the front linkage (96A) and the rear linkage (96B) each comprise a four-bar linkage.

4. The door assembly of claim 1, further comprising a door-to-door latch assembly (76) configured to couple the front door (10, 36) and the rear door (11, 56) to one another when the doors are in the closed position.

5. The door assembly of claim 1, further comprising an A pillar latch assembly (50) configured to selectively couple the front door (10, 36) to the A pillar (14, 26), and/or further comprising a C pillar latch assembly (70) configured to selectively couple the rear door (11, 56) to the C pillar (19, 28).

6. The door assembly of claim 1, wherein the front door (10, 36) and the rear door (11, 56) are each configured to translate outward away from a side (24) of the body (12, 20, 22) and in frontward and rearward directions relative to the body (12, 20, 22) during movement between the open and closed positions.

7. A method of assembling a door assembly for a vehicle, comprising:
providing a body (12, 20, 22) of the vehicle having a pair of sides (24), each of the sides (24) including an A pillar (14, 26), a C pillar (19, 28), an upper rail (30) extending between tops of the A pillar and the C pillar (14, 19, 26, 28), and a rocker rail (32) extending between bottoms of the A pillar and the C pillar (14, 19, 26, 28), the A pillar, the C pillar, the upper rail and the rocker rail (14, 19, 26, 28, 30, 32) defining an access opening (34);
defining a front compartment (78A) adjacent to the rocker rail (32) along the A pillar (14, 26);
defining a rear compartment (78B) in the rocker rail (32) adjacent to the C pillar (19, 28);
coupling a front actuator (82A) to the body (12, 20, 22) in the front compartment (78A);
coupling a rear actuator (82B) to the body (12, 20, 22) in the rear compartment (78B);
connecting a front linkage (96A) between a front door (10, 36), the front actuator (82A) and the body (12, 20, 22) near the A pillar (14, 26); and
connecting a rear linkage (96B) between a rear door (11, 56), the rear actuator (82B) and the body (12, 20, 22) near the C pillar (19, 28), such that actuation of the actuators (82A, 82B) facilitates opening and closing of the front and rear doors (10, 11, 36, 56).

8. The method of claim 7, further comprising casting a first casting (124) defining the front compartment (78A) and casting a second casting (126) defining the rear compartment (78B) to form the rocker rail (32)and optionally the method further comprising connecting an extrusion (128, 130) to the first casting (124) and the second casting (126) to further form the rocker rail (32).

9. The method of claim 7, wherein connecting each actuator (82A, 82B) to the corresponding linkage (96A, 96B) includes providing a ball joint connection (114A) between the actuator (82A, 82B) and a link (102A, 102B, 108A, 108B) of the corresponding linkage (96A, 96B).

10. The method of claim 7, further comprising attaching a door-to-door latch assembly (76) to the front door (10, 36) and the rear door (11, 56) to couple the doors to one another when in a closed position.

11. The method of claim 7, further comprising attaching an A pillar latch assembly (50) to selectively couple the front door (10, 36) to the A pillar (14, 26).

12. The method of claim 7, further comprising attaching a C pillar latch assembly (70) to selectively couple the rear door (11, 56) to the C pillar (19, 28).

13. The method of claim 7, wherein the front linkage (96A) and the rear linkage (96B) each comprise a four-bar linkage, and/or wherein the front door (10, 36) and the rear door (11, 56) are each configured to translate outward away from a side (24) of the body (12, 20, 22) and in frontward and rearward directions relative to the body (12, 20, 22) during movement between the open and closed positions.

14. A door assembly for a vehicle, comprising:
a body (12, 20, 22) of the vehicle including a pair of sides (24), each of the sides (24) including:
an A pillar (14, 26) adjacent to a front of the body (12, 20, 22) , a C pillar (19, 28) adjacent to a rear of the body (12, 20, 22), an upper rail (30) extending between tops of the A and C pillars (14, 19, 26, 28), and a rocker rail (32) extending between bottoms of the A and C pillars (14, 19, 26, 28), and wherein the A pillar, C pillar, upper rail and rocker rail (14, 19, 26, 28, 30, 32) define an access opening (34) therebetween;
a front door (10, 36) moveably connected to the body (12, 20, 22) near the A pillar (14, 26) and a rear door (11, 56) moveably connected to the body (12, 20, 22) near the C pillar (19, 28) and each moveable between an open position opening the access opening (34) and a closed position closing the access opening (34); and
a front linkage (96A) connecting the front door (10, 36) and the body (12, 20, 22) on or along the A pillar (14, 26) and a rear linkage (96B) connecting the rear door (11, 56) and the body (12, 20, 22) on or along the C pillar (19, 28), wherein the front and rear linkages (96A, 96B) facilitate opening and closing of the front and rear doors (10, 11, 36, 56) in response to actuation of the front and rear actuators (82A, 82B); and
wherein the rocker rail (32) defines a front compartment (78A) adjacent to the A pillar (14, 26), and a rear compartment (78B) adjacent to the C pillar (19, 28), and wherein the front linkage is coupled to the body in the front compartment and the rear linkage is coupled to the body in the rear compartment (78B).

15. The door assembly as set forth in claim 14, wherein a front actuator (82A) is located in the front compartment (78A) and couples the front linkage (96A) to the front door (10, 36) and effectuates movement of the front door (10, 36) between the open and closed position, and wherein a rear actuator (82B) is located in the rear compartment (78B) and couples the rear linkage (96B) to the rear door (11, 56) and effectuates movement of the rear door (11, 56) between the open and closed positions, and/or wherein the rocker rail (32) comprises a first casting (124) defining the front compartment (78A), a second casting (126) defining the rear compartment (78B), and an extrusion (128, 130) extending between the first and second castings (124, 126).
